# EUROPÄISCHE PATENTSCHRIFT

(11) **EP 4 421 678 B1**
(45) Veröffentlichungstag und Bekanntmachung des Hinweises auf die Patenterteilung: **02.04.2025**
(21) Anmeldenummer: 23158471.5
(22) Anmeldetag: 24.02.2023
(51) Int. Cl.: G06K 7/10, G06K 7/12, G06K 7/14

(54) **LESEN EINES OPTISCHEN CODES**
READING AN OPTICAL CODE
LECTURE D'UN CODE OPTIQUE

(43) Veröffentlichungstag der Anmeldung: 28.08.2024
(73) Patentinhaber: SICK AG, 79183 Waldkirch (DE)
(72) Erfinder: Ruf, Hannes, 792711 St. Peter (DE)

(56) Entgegenhaltungen:
- EP-A1- 2 026 249
- EP-A1- 3 822 844
- DE-U1- 202021 105 663
- US-A1- 2007 268 530

## Beschreibung

Die Erfindung betrifft einen kamerabasierten Codeleser zum Lesen eines optischen Codes auf einem Objekt in Relativbewegung zu dem Codeleser und ein Verfahren zum Lesen eines optischen Codes auf einem Objekt mit einem kamerabasierten Codeleser nach dem Oberbegriff von Anspruch 1 beziehungsweise 12.

Für die Automatisierung von logistischen Anwendungen, beispielsweise das automatische Sortieren von Objekten, werden Objekte mit einem Code versehen, die von einem Codeleser ausgelesen werden. Die verwendeten optischen Codes sind Barcodes oder zweidimensionale Codes wie ein Maxicode oder ein Aztec-Code, in einem etwas weiteren Sinne auch Beschriftungen, die mit einer Texterkennung (OCR) dekodiert werden. Um solche Codes zu lesen, werden Bilder der Objekte mit den Codes aufgenommen.

In einer automatisiert arbeitenden Lesevorrichtung, etwa bei einer Gepäckabfertigung in Flughäfen oder der automatisierten Sortierung von Paketen in Logistikzentren, werden die Objekte an dem Codeleser vorbeigefördert und Bilddaten der Objekte mit den darauf angeordneten Codes durch zeilenweise Abtastung gewonnen. Die einzelnen Bildzeilen werden anhand der bekannten oder gemessenen Bandgeschwindigkeit zusammengesetzt. Zeilenkameras erreichen eine hohe Auflösung und Geschwindigkeit.

Typischerweise nehmen die Zeilenkameras ein monochromes Bild auf, das auch als Grauwertbild oder Schwarz-Weiß-Bild bezeichnet wird. Damit wird die beste Photonenausbeute und daher das beste Signal-Rausch-Verhältnis erreicht, und Farberfassung erscheint für das Lesen von Codes, die ohnehin nur helle und dunkle Bereiche aufweisen, zunächst einmal nicht interessant. Sollen doch Farbinformationen gewonnen werden, so wird in der Regel auf Matrixkameras zurückgegriffen. Gerade bei schnellen Bandapplikationen hat das aber Nachteile, da eine hohe Framerate benötigt wird und das Zusammenfügen von deren Einzelbildern (Stitching) im Gegensatz zum einfachen Aneinanderreihen von Bildzeilen sehr rechenaufwändig wird. Außerdem kann ein Matrixbildsensor in Zeilenrichtung nicht dieselbe Pixelanzahl erreichen wie ein Zeilenbildsensor. Es sind auch Farbzeilenkameras bekannt, jedoch weniger verbreitet. Sie besitzen beispielsweise drei Zeilen in rot, grün und blau (RGB), eine alternierende Anordnung dieser Grundfarben auf einer einzigen Zeile oder in Nachahmung des Bayer-Patterns eine Zeile mit alternierenden roten und blauen Pixeln und eine zweite rein grüne Zeile. Das Bayer-Pattern ebenso wie die Repräsentation des Farbraums durch RGB werden häufig verwendet, stellen aber nicht die einzige Möglichkeit dar. Alternative Farbmuster fügen beispielsweise einen Weißkanal hinzu (RGBW) oder verwenden subtraktive Grundfarben (CMY, Cyan, Magenta, Yellow gegebenenfalls als CMYK mit Schwarzanteil Key). Es gibt weitere Repräsentationen des Farbraums wie HSV (Hue, Saturation, Value) oder Lab beziehungsweise CIELAB.

Die EP 3 822 844 B1 offenbart eine Zeilenkamera mit mindestens einer weißen Zeile zur Aufnahme eines Grauwertbildes und mindestens einer farbigen Zeile zur Aufnahme eines Farbbildes. Dabei sind in der farbigen Zeile rote und blaue Lichtempfangspixel vorgesehen, während grüne Lichtempfangspixel fehlen. Die grüne Farbinformation kann mit Hilfe der weißen Zeile aus den roten und blauen Bildinformationen rekonstruiert werden.

Die EP 4 080 402 A1 befasst sich mit einer Helligkeits- und Farbkorrektur von Bilddaten, die mit einer Zeilenkamera in Form eines Grauwertbildes und mindestens zweier Einfarbbilder aufgenommen werden. Es wird eine Helligkeitsfunktion individuell für ein jeweiliges Beleuchtungsmodul einer Zeilenkamera bestimmt und darin gespeichert. Die Zeilenkamera liest diese Helligkeitsfunktion aus und verwendet sie zur Korrektur des Grauwertbildes und der Einfarbbilder.

Dank der Fortentwicklung in der Kamera- und Bildsensortechnologie werden die zu verarbeitenden Bilder immer größer. Die ungeheuren Datenmengen stellen die begrenzten Rechenkapazitäten und Bandbreiten zur Weitergabe und Verarbeitung in einer Kamera unter Echtzeitbedingungen vor Herausforderungen. Dabei unterstützt der Einsatz heterogener Rechenarchitekturen, d.h. eines Verbundes eines Mikroprozessors (CPU, Central Processing Unit) mit beispielsweise einem FPGA (Field Programmable Gate Array), einem DSP (Digital Signal Processor), einer GPU (Graphics Processing Unit) oder auch einem sogenannten Kl-Beschleuniger (NPU, Neural Processing Unit, TPU, Tensor Processing Unit).

Besonders bewährt hat sich hier die Kombination mit einem FPGA, das für das Auslesen der Bilddaten aus dem Bildsensor zuständig ist. Das FPGA ist zudem über eine Hochgeschwindigkeitsschnittstelle (PCI, Peripheral Component Interconnect, PCIE, PCI Express, MIPI, Mobile Industry Processor Interface) mit einem Speicher des Mikroprozessors verbunden. So werden die Bilddaten über DMA (Direct Memory Access) vom FPGA in den Speicher übertragen. Dieser Prozess des Auslesens und Speicherns wird als Streaming bezeichnet. Der mittels CPU implementierte Decoder kann dann nachgelagert auf die gespeicherten Bilder zugreifen und die Codes auslesen. Der Streaming-Ansatz ist nicht mit allen oben genannten Zusatzbausteinen einer heterogenen Architektur ohne Weiteres möglich, sofern sie schon selbst eines gespeicherten Bildes bedürfen, während das FPGA Bilddaten direkt pixelweise auslesen und weiterverarbeiten kann.

Die Bilddaten werden vorzugsweise schon unmittelbar, on-the-fly, im FPGA vorverarbeitet, und dabei können mit den Bilddaten Zusatzinformationen oder Metadaten für den Mikroprozessor gespeichert werden. Typische Vorverarbeitungsschritte betreffen die Segmentierung, in der interessierende Bereiche (ROI, Region of Interest) mit Codekandidaten aufgefunden werden, oder eine Helligkeitsanpassung. Die EP 2 003 599 A1 offenbart einen optoelektronischen Sensor und ein Verfahren zur Erfassung von Codes, in dem ein Binarisierer für eine Umwandlung eines Farb- oder Grauwertbildes in ein Binärbild bereits während des Empfangs und/oder in Echtzeit ausgebildet ist, indem ein jeweils eingelesener Abschnitt binarisiert wird, noch während die weiteren Abschnitte eingelesen werden. Die EP 1 365 577 A1 beschreibt ein Verfahren zum Betrieb eines optoelektronischen Sensors, in dem ein Bild bereits während des Empfanges komprimiert wird. Bei solchen Vorverarbeitungen wird jeweils die Fähigkeit des FPGAs ausgenutzt, viele einfache Rechenoperationen wie beispielsweise Matrixmultiplikationen parallel in Echtzeit auszuführen. Sequenzielle, komplexere Rechenoperationen wie diejenigen eines Decoders zum Lesen optischer Codes bleiben dem Mikroprozessor vorbehalten, der dafür auf die bereitgestellten Bilddaten und mögliche Vorverarbeitungsergebnisse zurückgreift.

In der EP 3 916 633 A1 werden eine Kamera und ein Verfahren zum Verarbeiten von Bilddaten beschrieben, bei dem eine Segmentierung mittels neuronalen Netzes in einem Streaming-Verfahren erfolgt, d.h. Bilddaten schon verarbeitet werden, noch während weitere Bilddaten eingelesen werden. Zumindest die ersten Schichten des neuronalen Netzes können auf einem FPGA implementiert sein. Das verringert erheblich die Rechenzeiten und Anforderungen an die Hardware. Neben den Resultaten des neuronalen Netzes wird in manchen Ausführungsformen auch das Originalbild nach möglichen klassischen Vorverarbeitungen in einen Speicher gestreamt.

Ein weiterer bekannter Vorverarbeitungsschritt betrifft ein Zoom beziehungsweise eine Auflösungsanpassung. In Abgrenzung von einem optischen Zoom, bei dem Linsen eines Zoomobjektivs bewegt oder verändert werden, wird dies als digitales Zoom bezeichnet. Die von einer Zeilenkamera aufgenommenen Bildzeilen werden dabei rechnerisch durch Interpolation beziehungsweise Extrapolation auf eine durch einen Zoomfaktor bestimmte neue Auflösung gebracht. Dies wird beispielsweise in der US 2007/0268530 A1 beschrieben.

Die EP 2 026 249 A1 vermisst zur Aufnahme entzerrter Bilder mit gleichmäßiger Auflösung die Geometrie der Objekte und stellt einen Zoomfaktor und eine Aufnahmefrequenz für die jeweils abzutastende Zeile passend ein, insbesondere in Form von Zoomrampen und Frequenzrampen, die einer schräg zum Zeilensensor orientierten Objektfläche folgen. Dieser Zoomfaktor wird aber nicht digital durch Berechnungen berücksichtigt, sondern optisch eingestellt.

Das herkömmliche digitale Zoom betrifft nur Grauwertbilder. In einer Farbzeilenkamera stellt sich die zusätzliche Problematik, dass trotz der Möglichkeit unterschiedlicher Zoomfaktoren für jede Zeile Grauwertbild und Farbbild synchron zueinander bleiben müssen. Dabei werden wegen der zusätzlichen farbigen Bilddaten die zu verarbeitenden Datenmengen nochmals wesentlich größer, und die Kamera muss die erforderliche Verarbeitungsgeschwindigkeit erreichen. Das überfordert bei herkömmlichen Ansätzen die Hardwareressourcen einer Kamera, die angesichts schneller Bandgeschwindigkeiten, hoher Auflösungen und der Forderung nach geringer dynamischer Verlustleistung die Verarbeitung einschließlich des digitalen Zooms nicht mehr in Echtzeit leisten kann.

Es ist daher Aufgabe der Erfindung, das Codelesen mit einer Zeilenkamera weiter zu verbessern.

Diese Aufgabe wird durch einen kamerabasierten Codeleser zum Lesen eines optischen Codes auf einem Objekt in Relativbewegung zu dem Codeleser und ein Verfahren zum Lesen eines optischen Codes auf einem Objekt mit einem kamerabasierten Codeleser nach Anspruch 1 beziehungsweise 12 gelöst. Optische Codes sind insbesondere Barcodes und zweidimensionale Codes beliebigen Standards. Die Relativbewegung zwischen den aufzunehmenden Objekten und dem Codeleser entsteht vorzugsweise dadurch, dass der Codeleser stationär an einem Objektstrom montiert ist, beispielsweise an einer Fördereinrichtung. Der zeilenförmigen Bildsensor oder Zeilensensor nimmt jeweils eine Bildzeile und damit den entsprechenden zeilenförmigen Ausschnitt des Objekts auf, der sich in der aktuellen Position der Relativbewegung im Sichtfeld des Bildsensors befindet. Eine interne, externe oder teilweise interne und teilweise externe Steuer- und Auswertungseinheit der Kamera weist mindestens eine ersten Vorverarbeitungseinheit und eine weitere Verarbeitungseinheit auf. Die erste Vorverarbeitungseinheit ist mindestens mittelbar mit dem Bildsensor verbunden. Sie liest Bildzeile für Bildzeile ein und gibt sie vorverarbeitet an die weitere Verarbeitungseinheit weiter, wobei dies bedeuten kann, dass die vorverarbeiteten Bildzeilen in einen Speicher geschrieben werden, auf den die weitere Verarbeitungseinheit ebenfalls Zugriff hat. So entsteht eine Pipelinestruktur, in der die erste Vorverarbeitungseinheit für das Streaming der Bilddaten zuständig oder jedenfalls daran beteiligt ist, d.h. das sukzessive Einlesen und Weitergeben von Bilddaten in einem Bilddatenstrom. Die aneinandergereihten Bildzeilen ergeben ein Bild, das im Grunde ein Endlosbild ist oder zu einem Bild mit einer willkürlich festgelegten Anzahl Bildzeilen zusammengefasst werden kann, vorzugsweise inhaltsabhängig als ein Bild je Objekt oder interessierendem Bereich, wie einem Etikett oder Codebereich.

Der hier betrachtete Vorverarbeitungsschritt der ersten Vorverarbeitungseinheit ist ein Zoom, mit dem die jeweilige Bildzeile mit einem Zoomfaktor z neu skaliert wird. Es wird also eine neue Bildzeile gebildet, in der die n Pixel auf n*z Pixel gestreckt oder gestaucht sind. Dabei sind Zoomfaktoren z>1 entsprechend einer Streckung und z<1 entsprechend einer Stauchung möglich. Der Zoomfaktor ist dabei vorzugsweise von Bildzeile zu Bildzeile jeweils so gewählt, dass die Bildzeilen Objekte in einem gleichen Maßstab aufnehmen, d.h. Objektstrukturen gleicher Ausdehnung mit gleich vielen Pixeln aufgenommen werden. Eine Möglichkeit, dies auszudrücken, ist eine feste Auflösung in dpi (dots per inch, hier eher Pixel per inch). Der Zoomfaktor z=1 kann vereinzelt in besonderen Situationen vorkommen, in denen zufällig aufgrund des Objekts und dessen Abstands die Zielauflösung einer Bildzeile von vorneherein erreicht ist. Das ändert dann nichts daran, dass die Kamera ebenso für andere Zoomfaktoren eingerichtet ist und vorzugsweise die Berechnungen für das Zoomen auch bei z=1 durchführt, statt diesen Sonderfall eigens abzufangen, was natürlich auch möglich ist. Es kann neben dem Zoom weitere Vorverarbeitungen geben, wofür einleitend einige Beispiele genannt sind.

Die weitere Verarbeitungseinheit liest aus den vorverarbeiteten Bildzeilen den optischen Code aus. Dies kann auf interessierende Bereiche beschränkt bleiben, in denen sich gemäß einer Segmentierung als weiterem Vorbereitungsschritt tatsächlich Codes befinden.

Die Erfindung geht von dem Grundgedanken aus, einen Farbzeilensensor einzusetzen und das Zoom in parallelen Kanälen für die jeweiligen Farben durchzuführen. Der Bildsensor ist demnach als Zeilensensor mit mehreren Zeilenanordnungen von Lichtempfangselementen oder Lichtempfangspixeln ausgebildet. Mit mehreren Zeilenanordnungen ist eine geringe Anzahl jedenfalls kleiner zehn gemeint, die Auflösung in Zeilenrichtung und damit die Anzahl Lichtempfangselemente in Zeilenrichtung ist um Größenordnungen höher und beträgt mehrere hundert, tausend oder mehr. Jedes der Lichtempfangselemente ist jeweils für die Aufnahme von Grauwerten oder einer bestimmten Farbe zuständig. Es gibt also Lichtempfangselemente, die als farbige Lichtempfangselemente bezeichnet werden können und die nur eine Farbe wahrnehmen, beispielsweise mit einem Farbfilter versehen sind. Sie bilden mehrere Farbkanäle, in denen jeweils farbige Bildzeilen der zugehörigen Farbe aufgenommen werden. Andere Lichtempfangselemente, die als weiße Lichtempfangselemente bezeichnet werden können, nehmen das ganze optische Spektrum wahr und weisen insbesondere keinen Farbfilter auf. Sie bilden einen Grauwertkanal, in dem grauwertige oder schwarzweiße Bildzeilen aufgenommen werden. Eine Grenze des wahrgenommenen Lichts bilden natürlich die Hardwarebeschränkungen des Bildsensors. Die weißen und farbigen Pixel können in verschiedenen Mustern über die Zeilenanordnungen verteilt sein.

Die erste Verarbeitungseinheit weist mehrere parallele Verarbeitungskanälen auf, nämlich mindestens einen Verarbeitungskanal für den Grauwertkanal und jeweils mindestens einen Verarbeitungskanal für jeden Farbkanal. Damit wird das Zoomen für die verschiedenen Farben und die Grauwerte parallelisiert beziehungsweise jeweils eine Bildzeile, die eine grauwertige Bildzeile und mehrere farbige Bildzeilen aufweist, parallel und synchron neu skaliert. Die Zugehörigkeit einer grauwertigen Bildzeile und farbiger Bildzeilen zueinander ergibt sich dadurch, dass sie einer Aufnahme des Bildsensors beziehungsweise dem gleichen Ausschnitt der aufgenommenen Szenerie entsprechen. Es kann in den Verarbeitungskanälen ein gleicher oder individueller Zoomfaktor z verwendet werden.

Die Erfindung hat den Vorteil, dass das einleitend geschilderte Problem der großen Datenmenge und Synchronität der Bilddaten bei Farbaufnahmen und sogar noch gleichzeitiger Grauwertaufnahme gelöst ist. Durch die parallelen Verarbeitungskanäle kann die erforderliche Verarbeitungsgeschwindigkeit erreicht und die dynamische Verlustleistung reduziert werden. Andernfalls wäre die Problemstellung auf in eine Kamera integrierter Hardware nicht oder jedenfalls nur zu unverhältnismäßigen Kosten zu lösen. Das Zoomen ist dank der Erfindung in Echtzeit möglich und kann in eine Pipelinestruktur mit on-the-fly-Verarbeitung noch während des Streamens eingebunden werden. On-the-fly bedeutet, dass eine Bildzeile neu skaliert wird, während bereits die nächste Bildzeile aufgenommen oder ausgelesen wird. Effektiv wird damit für das Zoom bis auf einen geringen Zeitversatz für ein einmaliges Durchlaufen eines der parallelen Verarbeitungskanäle keine spürbare zusätzliche Verarbeitungszeit benötigt. Sobald die Bilddaten für eine nachgeordnete Bildverarbeitung beziehungsweise ein Codelesen der weiteren Verarbeitungseinheit überhaupt zur Verfügung stehen, sind sie auch schon mit dem Zoomfaktor neu skaliert.

Der Codeleser weist bevorzugt einen Abstandssensor auf, wobei die Steuer- und Auswertungseinheit dafür ausgebildet ist, den Zoomfaktor z aus einem Abstandswert des Abstandssensors zu bestimmen, insbesondere Bildzeile für Bildzeile. Der Abstandssensor kann in den Codeleser integriert oder extern sein, beispielsweise ein stromaufwärts gegen die Relativbewegung vorgeordneter Laserscanner. Dem gemessenen Abstand kann über eine geometrische Berechnung oder auch eine vorbereitete Nachschlagtabelle der passende Zoomfaktor z zugeordnet werden, insbesondere Bildzeile für Bildzeile ein neuer Zoomfaktor z. Im Falle einer schräg zu dem Codeleser stehenden Objektfläche muss nicht zwingend für jede Zeile ein neuer Abstandswert gemessen und dazu ein Zoomfaktor z berechnet werden, sondern es können Zoomrampen abgefahren werden, in denen der Zoomfaktor der Schräge folgt, wie in der einleitend genannten EP 2 026 249 A1 beschrieben. Die erste Vorverarbeitungseinheit erhält beispielsweise einen Abstandswert von der weiteren Verarbeitungseinheit und bestimmt sich damit den Zoomfaktor z selbst, oder es wird direkt der Zoomfaktor z von der weiteren Verarbeitungseinheit an die erste Vorverarbeitungseinheit übergeben. Die Steuer- und Auswertungseinheit kann für die Steuerung des Abstandssensors und/oder die Bestimmung eines Zoomfaktors eine weitere Einheit aufweisen, die die genannte Funktionalität allein oder gemeinsam mit der weiteren Verarbeitungseinheit leistet.

Der Zoomfaktor z ist vorzugsweise in den Verarbeitungskanälen unterschiedlich. Damit wird beispielsweise ein Pixelmuster des Bildsensors ausgeglichen, in dem die für Grauwerte und für eine jeweilige Farbe empfindlichen Lichtempfangselemente unterschiedlich dicht liegen, somit die Auflösung in dem Grauwertkanal und in den Farbkanälen unterschiedlich ist. Der Unterschied kann zwischen Grauwertkanal und in sich gleichen Farbkanälen, aber auch innerhalb der Farbkanäle auftreten.

Die Steuer- und Auswertungseinheit ist bevorzugt dafür ausgebildet, Bildzeilen jeweils in der Mitte zu teilen und eine der entstehenden Halbzeilen zu spiegeln, wobei die Verarbeitungskanäle dafür ausgebildet sind, beide Halbzeilen einer Bildzeile parallel neu zu skalieren. Dafür ist vorzugsweise innerhalb der Steuer- und Auswertungseinheit die erste Vorverarbeitungseinheit oder eine noch vorzustellende vorgelagerte zweite Vorverarbeitungseinheit zuständig. Durch die Halbierung der Bildzeile beziehungsweise effektive Verdopplung der Verarbeitungskanäle ist eine noch schnellere Verarbeitung und/oder geringere Leistungsfähigkeit der verwendeten Rechenbausteine beziehungsweise geringerer Taktfrequenz möglich. Die Trennung in der Mitte und das Spiegeln sorgen für ein homogenes Zoom und einen glatten Übergang, wenn anschließend die eine neu skalierte Halbzeile wieder zurückgespiegelt und mit der anderen neu skalierten Halbzeile kombiniert wird.

Die Verarbeitungskanäle sind bevorzugt dafür ausgebildet, eine Bildzeile durch lineare Interpolation oder Extrapolation mit dem Zoomfaktor z neu zu skalieren, insbesondere indem die aufgenommene Bildzeile um den Zoomfaktor z gestreckt oder gestaucht und die gestreckte oder gestauchte Bildzeile wieder auf das ursprüngliche Pixelraster diskretisiert wird, wobei an Übergängen des Pixelrasters die gestreckten oder gestauchten Pixel proportional zu ihrem mit dem neuen Pixel überlappenden Flächenanteil zu dem neuen Pixel beitragen. Das Zoomen ist folglich eine lineare Operation. Die Berechnung wird natürlich praktisch durch Gleichungen angegeben, aber das kann man sich so vorstellen, dass neben eine Pixelzeile mit den ursprünglichen Breiten die um den Zoomfaktor z gestreckte oder gestauchte Bildzeile gelegt wird. Einem beispielhaft herausgegriffenen Pixel in der Pixelzeile mit den ursprünglichen Breiten, das als neues Pixel bezeichnet wird, soll nun ein neuer Pixelwert zugeordnet werden, der sich aus den gestreckten oder gestauchten anliegenden Pixeln ergibt. Solange 0,5 ≤ z ≤ 2 gilt, was für praktische Belange beim Codelesen in der Regel ausreicht, kann es pro neuem Pixel nur zwei solche anliegenden Pixel geben, und sie tragen proportional zu ihrem überlappenden Flächenanteil bei. Liegt also der Übergang der anliegenden Pixel mittig zu dem betrachteten Pixel, so tragen die anliegenden Pixel hälftig bei, mit entsprechend linear geänderten Gewichten in dem Maße, wie der Übergang nach rechts oder links verschoben ist. Das Vorgehen ist sehr einfach auf den Fall ohne die Beschränkung 0,5 ≤ z ≤ 2 erweiterbar, es kann dann mehr anliegende Pixel geben, die teilweise voll überlappen und mit entsprechend hohem Gewicht beitragen. Bei einem Zoomen mit z>1 werden der gestreckten Bildzeile an den Rändern vorzugsweise ignoriert oder abgeschnitten, entsprechend kann bei einem Zoomen mit z<1 Pixel bis zu den äußeren Rändern mit einem festen Wert wie Null aufgefüllt werden, damit die neu skalierte Bildzeile unabhängig vom Zoomfaktor z am Ende immer gleich lang bleibt.

Die erste Vorverarbeitungseinheit weist bevorzugt eine gemeinsame Zoomsteuerung für alle Verarbeitungskanäle auf. Dies sichert auf einfache Weise die Synchronizität und einen überall passenden Zoomfaktor z.

Die erste Vorverarbeitungseinheit weist bevorzugt ein FPGA (Field Programmable Gate Array) und/oder die weitere Verarbeitungseinheit einen Mikroprozessor auf. Wie schon einleitend erwähnt, hat sich diese hybride Architektur bei kamerabasierten Codelesern bewährt, in der das FPGA für solche Verarbeitungsschritte zuständig ist, die in sich nicht besonders komplex, aber auf große Datenmengen anzuwenden sind. Der Mikroprozessor kümmert sich dann um nachgelagerte Verarbeitungsschritte, insbesondere das Codelesen, und das vorzugsweise nur noch in interessierenden Bereichen oder anderweitig vorselektierten und dadurch reduzierten Datenmengen.

Die Steuer- und Auswertungseinheit weist bevorzugt eine zweite Vorverarbeitungseinheit auf, insbesondere ein FPGA, die zwischen dem Bildsensor und der ersten Vorverarbeitungseinheit angeordnet und dafür ausgebildet ist, eine Farbanpassung der mit den Farbkanälen aufgenommenen Bildzeilen vorzunehmen und/oder aus dem Grauwertkanal und den Farbkanälen mindestens einen weiteren Farbkanal zu erzeugen. Jeder Bildpunkt kann als Vektor mit mehreren Farbkomponenten verstanden werden, wobei je nach Ausführungsform ein Grauwert eine der Farbkomponenten ist oder nicht. Farbanpassung oder Farbabgleich bedeutet, dass den Bildpunkten jeweils neue, angepasste Farbkomponenten zugewiesen werden, die Sollfarben entsprechen und Farbverfälschungen ausgleichen. Abstrakt lässt sich das als eine im Allgemeinen nichtlineare Funktion aus einem Farbraum in einen Farbraum verstehen. Typischerweise bleibt die Funktion im selben Farbraum, ohne aber einen Wechsel auszuschließen, beispielsweise mit Bildaufnahme in RGB und angepassten Farben in CYMK. Die Funktion kann beispielsweise in Form von Gewichten implementiert sein, mit denen der Grauwertkanal beziehungsweise die Farbkanäle zu dem farbangepassten Bildpunkt beitragen, als Nachschlagtabelle oder vorzugsweise als neuronales Netz. Die Farbanpassung kann auch einen weiteren Farbkanal erzeugen beziehungsweise eine Farbe rekonstruieren. Insbesondere nimmt der Grauwertkanal eine Überlagerung aller Grundfarben auf, so dass eine Grundfarbe isoliert werden kann, wenn die anderen Grundfarben aufgenommen sind. Beispielsweise weist der Bildsensor nur weiße, rote und blaue, aber keine grünen Lichtempfangselemente auf. Es gibt dann originär keinen grünen Farbkanal, der aber aus den vorhandenen Farbkanälen rekonstruierbar ist. Der Rekonstruktion kann sich eine Farbanpassung anschließen, oder besonders bevorzugt erfolgen Rekonstruktion und Farbanpassung in einem Schritt.

Vorzugsweise wird ein Grauwertbild aus Bildzeilen des Grauwertkanals zum Lesen von Codes verwendet und/oder ein Farbbild aus Bildzeilen der Farbkanäle dafür verwendet, um codetragende Objekte und/oder Codebereiche zu erkennen, zu klassifizieren und/oder vom Bildhintergrund zu unterscheiden. Es ist prinzipiell möglich, optische Codes aus einem Farbbild zu lesen. In dem Grauwertbild ergeben sich jedoch das bestmögliche Signal-Rauschverhältnis und je nach Auslegung des Bildsensors auch die höchste Auflösung, so dass Codelesen mit gleicher Qualität möglich ist wie mit einer herkömmlichen monochromen Bildaufnahme. Die Farbinformationen können für beliebige, aber auch für mit dem Codelesen verbundene Funktionen genutzt werden, beispielsweise ein anfängliches Segmentieren beziehungsweise Auffinden von Codebereichen. Häufig unterscheidet sich der Untergrund des Codes farblich von der Umgebung, oder die Farbinformation kann dafür verwendet werden, ein codetragendes Objekt zu erkennen und vom Hintergrund zu trennen. Alternativ wird das Farbbild für irgendeine andere Funktion genutzt, insbesondere als solches ausgegeben und erst nachgelagert verwendet, sei es für Visualisierungs- und Diagnosefunktionen oder ganz andere Zusatzaufgaben. Damit können die beiden Funktionen Aufnahme eines für Codelesen besonders geeigneten Grauwertebildes und eines für unterstützende oder andere Zwecke nutzbaren Farbbildes miteinander verbunden werden, insbesondere in einem Gerät.

Vorzugsweise sind zwei, drei oder vier Zeilenanordnungen vorgesehen, und mindestens eine Zeilenanordnung weist nur Lichtempfangselemente auf, die für weißes Licht empfindlich sind. Die genannten Zahlen sind hier genaue Angaben, keine Mindestangaben. Mit wenigen Zeilenanordnungen wird ein besonders kompakter Aufbau des Bildsensors erreicht. Ein Beispiel ist eine Doppelzeile mit einer Zeile für grauwertige Bilddaten und einer Zeile für farbige Bilddaten. Da sich mehrere Farben eine einzige Zeile für farbige Bilddaten teilen müssen, sind bevorzugt zumindest zwei Zeilen zur Aufnahme farbiger Bilddaten vorgesehen, um die Auflösung in Zeilenrichtung zu erhöhen.

Der Bildsensor weist bevorzugt Lichtempfangselemente auf, die für jeweils eine von zwei Grundfarben empfindlich sind, insbesondere rot und blau, aber keine Lichtempfangselemente, die für die dritte Grundfarbe empfindlich sind, insbesondere grün. Grundfarben sind die additiven Grundfarben rot, grün und blau beziehungsweise die subtraktiven Grundfarben blaugrün (cyan), purpur (magenta) und gelb (yellow). Indem nur zwei davon vorgesehen sind, werden Lichtempfangselemente und Zeilenanordnungen eingespart. Die fehlende Grundfarbe kann wie oben beschrieben bei Bedarf rekonstruiert werden. Alternativ wäre denkbar, dass alle drei jeweiligen Grundfarben vorhanden sind (RGB und CMY beziehungsweise RGBW, CMYW). Die vorhandenen Farbkomponenten oder aufgenommenen Grundfarben sind bevorzugt rot und blau. Die Aufnahme von additiven Grundfarben führt zu besonders guten Ergebnissen, was aber nicht bedeutet, dass die Rekonstruktion einer fehlenden Farbkomponente auf diese Farbrepräsentation beschränkt ist. Gerade das im Bayer-Pattern doppelt vorgesehene grün wird in dieser bevorzugten Ausführungsform nicht aufgenommen, so dass hierfür keine Lichtempfangselemente des Bildsensors vorgesehen sein müssen. Bei Bedarf wird grün aus den weißen, roten und blauen Farbkomponenten erzeugt.

Die farbigen Lichtempfangselemente innerhalb einer Zeile zur Aufnahme von farbigen Bildzeilen sind bevorzugt für dieselbe Farbe empfindlich. Mit anderen Worten ist eine solche Zeile einheitlich, beispielsweise eine rote Zeile, eine grüne Zeile oder eine blaue Zeile. Damit wird die entsprechende Farbinformation in voller Auflösung erfasst. Alternativ können die Lichtempfangselemente innerhalb einer Zeile auch für unterschiedliche Farben empfindlich sein, insbesondere in alternierender Reihenfolge wie rot-blau-rot-blau oder rot-grün-grün-blau. Weiterhin ist denkbar, einheitliche Zeilen und gemischte Zeilen miteinander zu kombinieren, etwa eine Zeile mit rot-blau-rot-blau und eine rein grüne Zeile. Prinzipiell könnten sogar weiße und farbige Lichtempfangselemente in derselben Zeile gemischt vorkommen, aber vorzugsweise bilden weiße Lichtempfangselemente ganze, rein weiße Zeilen, denn ansonsten ergeben sich für das Codelesen relevante Auflösungsverluste und jedenfalls vermeidbare Komplexitäten.

Die grauwertigen Bildzeilen werden vorzugsweise in höherer Auflösung aufgenommen als die farbigen Bildzeilen. Das ist vorteilhaft in Fällen, in denen die Farbe nur unterstützend benötigt wird, wenn das Codelesen selbst vorzugsweise mit den grauwertigen Bildzeilen durchgeführt wird. Die geringere Auflösung kann bereits originär entstehen, beispielsweise durch weniger oder größere Lichtempfangselemente einer jeweiligen Farbe. Alternativ ist auch ein Binning oder Downsampling auf Hardwareebene oder Softwareebene denkbar, um die zu verarbeitenden Daten für farbige Bildzeilen im Nachhinein für spätere Schritte zu reduzieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines kamerabasierten Codelesers;
- Fig. 2: eine dreidimensionale Ansicht einer Anwendung des Codelesers in fester Montage über einem Förderband mit codetragenden Objekten;
- Fig. 3: eine schematische Darstellung eines zeilenförmigen Bildsensors mit einer roten, einer blauen und einer weißen Zeile;
- Fig. 4: eine schematische Darstellung eines zeilenförmigen Bildsensors mit einer roten, einer blauen und zwei weißen Zeilen;
- Fig. 5: eine schematische Darstellung eines zeilenförmigen Bildsensors mit einer alternierend rot-blauen und einer weißen Zeile;
- Fig. 6: eine schematische Darstellung eines zeilenförmigen Bildsensors mit zwei alternierend rot-blauen und zwei weißen Zeilen;
- Fig. 7: eine schematische Darstellung einer Verarbeitungspipeline mit Bildsensor, zwei Vorverarbeitungseinheiten und einer weiteren Verarbeitungseinheit;
- Fig. 8: eine Darstellung zur Illustration eines streckenden Zooms mit Zoomfaktor z>1; und
- Fig. 9: eine Darstellung zur Illustration eines stauchenden Zooms mit Zoomfaktor z<1.

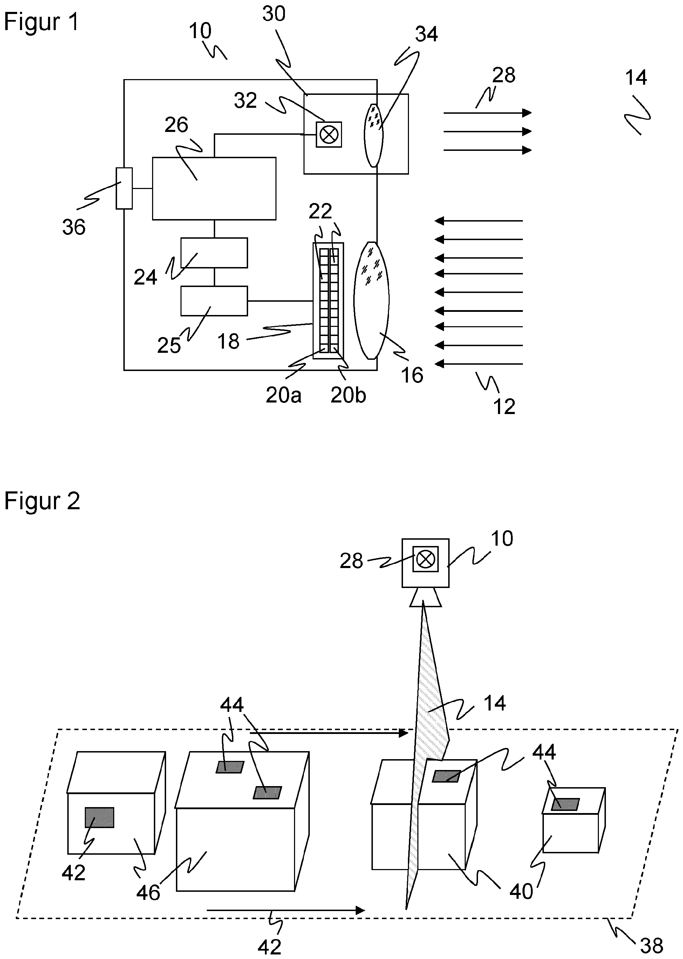

Figur 1 zeigt eine sehr vereinfachte Blockdarstellung eines kamerabasierten Codelesers 10. Der Codeleser 10 erfasst Empfangslicht 12 aus einem Erfassungsbereich 14 durch ein Aufnahmeobjektiv 16, das hier nur durch eine einfache Linse repräsentiert ist. Ein zeilenförmiger Bildsensor 18 erzeugt Bilddaten des Erfassungsbereichs 14 und der dort gegebenenfalls vorhandenen Objekte. Der Bildsensor 18 weist zumindest zwei Zeilen 20a-b von lichtempfindlichen Empfangspixeln 22 auf, wobei in Zeilenrichtung eine Vielzahl von hunderten, tausenden oder noch mehr Empfangspixeln 22 vorgesehen sind.

Die Bilddaten des Bildsensors 18 werden von einer Steuer- und Auswertungseinheit ausgelesen. Die Steuer- und Auswertungseinheit ist hier beispielhaft als eine Pipelinestruktur mit zwei Vorverarbeitungseinheiten 24, 25 und einer weiteren Verarbeitungseinheit 26 dargestellt. In anderen Ausführungsformen gibt es nur die erste Vorverarbeitungseinheit 24, und die zweite Vorverarbeitungseinheit 25 fehlt, während in wieder anderen Ausführungsformen zusätzliche Vorverarbeitungseinheiten vorgesehen sein können. Vorzugsweise weisen die Vorverarbeitungseinheiten 24, 25 ein FPGA (Field Programmable Gate Array) und die weitere Verarbeitungseinheit 26 einen Mikroprozessor (CPU, Central Processing Unit) auf. Allgemein kommen beliebige digitale Rechenbausteine in Betracht, außer einem FPGA und einer CPU also beispielsweise auch ein DSP (Digital Signal Processor), eine GPU (Graphics Processing Unit), eine NPU (Neural Processing Unit) oder eine TPU (Tensor Processing Unit). Die Steuer- und Auswertungseinheit kann zumindest teilweise in einer angeschlossenen Recheneinheit implementiert sein, beispielsweise einem Computer, einem lokalen Netzwerk, einem Edge-Device oder einer Cloud.

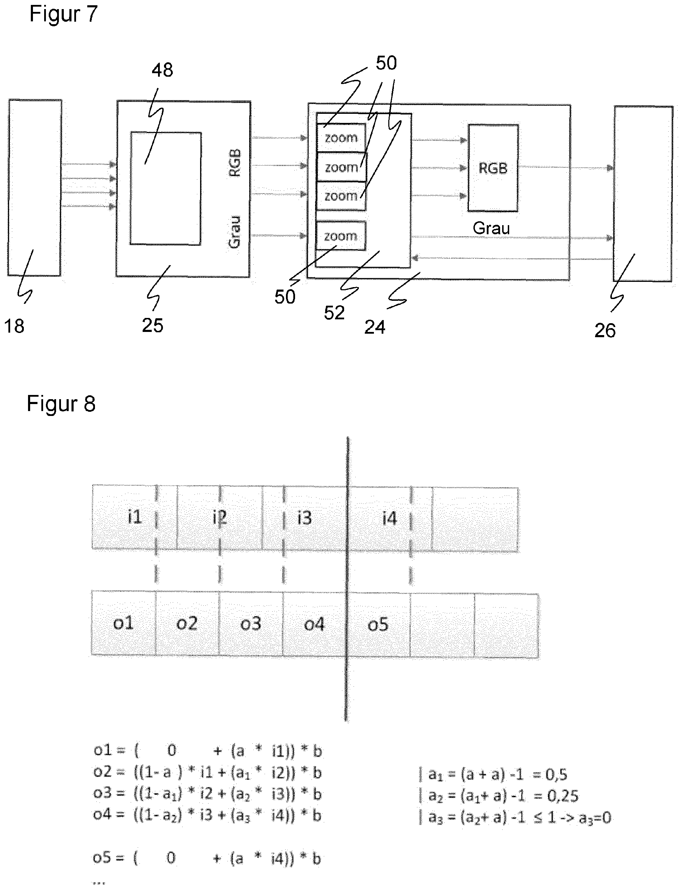

Ein bevorzugter Teil der Auswertung besteht darin, erfasste Bildzeilen zu einem Gesamtbild aneinanderzureihen. Ansonsten können bei der Auswertung die Bilddaten vorbereitend gefiltert, geglättet, helligkeitsnormiert, auf bestimmte Bereiche zugeschnitten oder binarisiert werden. Erfindungsgemäß ist ein digitales Zoom vorgesehen, das später unter Bezugnahme auf die Figuren 7 bis 9 genauer erläutert wird. Weiter erfolgt typischerweise eine Segmentierung, in der einzelne Objekte oder Codebereiche aufgefunden und darin enthaltene Codes dann decodiert werden, also die in den Codes enthaltene Information ausgelesen. Die Arbeitsteilung zwischen den Vorverarbeitungseinheiten 24, 25 und der weiteren Verarbeitungseinheit 26 sieht vorzugsweise vor, dass datenintensive, aber für sich einfache Schritte insbesondere mit dem Erfordernis, auf sämtliche Pixel zuzugreifen, von den Vorverarbeitungseinheiten 24, 25 erledigt werden. Komplexere Schritte insbesondere nur noch innerhalb interessierender Bereiche sind dann der weiteren Verarbeitungseinheit 26 zugewiesen. Die Vorverarbeitungseinheiten 24, 25 können ihre Aufgaben bereits während des Streamens erfüllen, also schon während des Einlesens und Weitergebens von Bilddaten von dem Bildsensor 18 zu der weiteren Verarbeitungseinheit 26. Eine solche Verarbeitungspipeline oder on-the-fly-Verarbeitung ermöglicht eine Echtzeitverarbeitung, in der die Bilddaten praktisch schon vorverarbeitet sind, sobald sie überhaupt verfügbar werden. Insbesondere ist das digitale Zoom ein Schritt, der schon während des Streamens von der ersten Vorverarbeitungseinheit 24 durchgeführt werden kann.

Um den Erfassungsbereich 14 mit Sendelicht 28 ausreichend hell auszuleuchten, ist vorzugsweise eine Beleuchtungseinrichtung 30 mit mindestens einer Lichtquelle 32 und einer Sendeoptik 34 vorgesehen, die abweichend von der Darstellung auch extern sein kann. An einer Schnittstelle 36 des Codelesers 10 können Daten ausgegeben werden, beispielsweise Rohbilddaten, vorverarbeitete Bilddaten und sonstige Daten in verschiedenen Verarbeitungsstufen, wie identifizierte Objekte, gelesene Codeinformationen oder noch nicht decodierte Codebilddaten. Umgekehrt ist möglich, den Codeleser 10 über die Schnittstelle 36 oder eine weitere Schnittstelle zu parametrieren.

Figur 2 zeigt eine mögliche Anwendung des Codelesers 10 in Montage an einem Förderband 38, das Objekte 40 in einer Förderrichtung 42, wie durch den Pfeil angedeutet, durch den Erfassungsbereich 14 des Codelesers 10 fördert. Die Objekte 40 tragen an ihren Außenflächen Codebereiche 44. Aufgabe des Codelesers 10 ist, die Codebereiche 44 zu erkennen, die dort angebrachten Codes auszulesen, zu dekodieren und dem jeweils zugehörigen Objekt 40 zuzuordnen. Um auch seitlich angebrachte Codebereiche 46 zu erkennen, werden vorzugsweise mehrere Codeleser 10 aus unterschiedlicher Perspektive eingesetzt. Es kann zusätzliche Sensoren geben, beispielsweise einen vorgelagerten Laserscanner zur Erfassung der Geometrie der Objekte 40 oder einen Inkrementalgeber zur Erfassung der Geschwindigkeit des Förderbandes 38. Anstelle eines vorgelagerten Laserscanners oder in dessen Ergänzung kann der Codeleser 10 einen integrierten Abstandssensor aufweisen.

Der Erfassungsbereich 14 des Codelesers 10 ist entsprechend dem zeilenförmigen Bildsensor 18 eine Ebene mit einem zeilenförmigen Lesefeld. Indem die Objekte 40 in der Förderrichtung 42 zeilenweise aufgenommen werden, entsteht nach und nach ein Gesamtbild der vorbeigeförderten Objekte 40 samt der Codebereiche 44. Die Zeilen 20a-b liegen dabei so nahe beieinander, dass sie praktisch den gleichen Objektabschnitt erfassen. Alternativ könnte ein Versatz auch optisch oder rechnerisch kompensiert werden.

Der Codeleser 10 erfasst mit seinem Bildsensor 18 farbige Bilddaten oder ein Farbbild. Es gibt folglich mehrere Farbkanäle, da ein Farbraum nur in mehreren Farbkomponenten repräsentiert werden kann. Die Farbinformation kann für verschiedenste Zwecke genutzt werden. Neben einer Farbwiedergabe für einen menschlichen Betrachter kann das beispielsweise die Klassifizierung von Objekten 40 sein, etwa um herauszufinden, ob es sich um ein Paket, einen Briefumschlag oder einer Tüte handelt. Es kann festgestellt werden, ob ein Förderbandbehältnis leer ist, wie eine Schale eines Schalenförderers oder eine Kiste. Das Segmentieren der Bilddaten in Objekte 40 oder Codebereiche 44 kann anhand der Farbinformation vorgenommen oder davon unterstützt werden. Es können zusätzliche Bilderkennungsaufgaben gelöst werden, wie die Erkennung bestimmter Aufdrucke oder Aufkleber beispielsweise zur Gefahrgutkennzeichnung, oder Schriften gelesen werden (OCR, Optical Character Recognition).

Der Codeleser 10 erfasst mit seinem Bildsensor 18 zusätzlich grauwertige Bilddaten oder ein Grauwert- beziehungsweise Schwarz-Weiß-Bild, weist also zu den Farbkanälen einen Grauwertkanal auf. In einem vereinheitlichten Sprachgebrauch kann dies so verstanden werden, dass neben den eigentlichen Farbkanälen, wie rot, grün und blau, auch ein weißer Farbkanal vorgesehen ist. Dabei wird die Repräsentation RGB eines Farbraums im Folgenden stellvertretend verwendet, ohne damit andere Repräsentationen auszuschließen, von denen einleitend mehrere beispielhaft genannt sind.

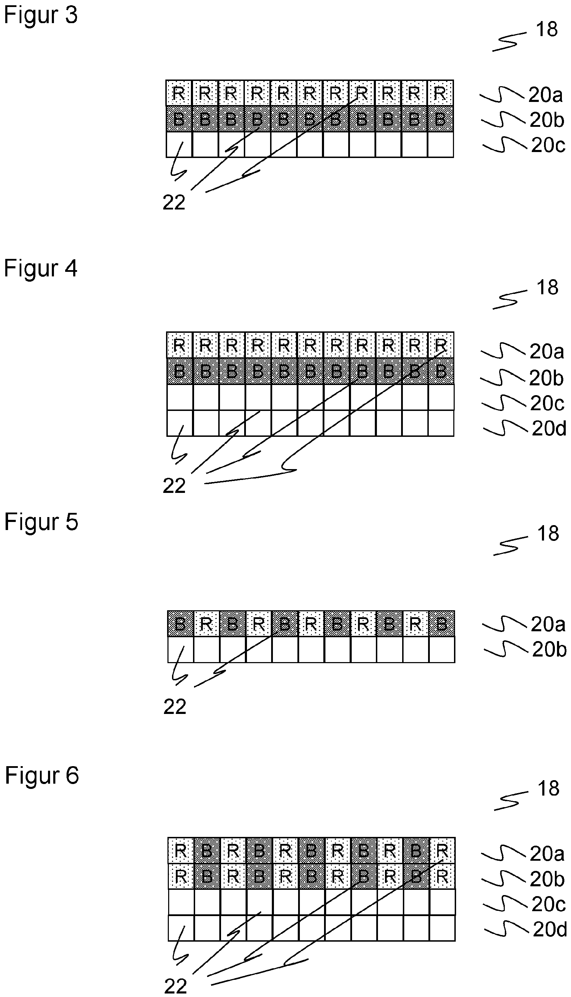

Die Figuren 3 bis 6 zeigen einige Beispiele von Ausführungsformen des zeilenförmigen Bildsensors 18 für eine gemeinsame Erfassung von Schwarz-Weiß-Bildern und Farbinformationen. Gemeinsam ist diesen Ausführungsformen, dass zumindest eine der Zeilen 20a-d eine weiße Zeile ist, deren Empfangspixel 22 in den Grenzen der Hardware Licht über das gesamte Spektrum erfassen. Zumindest eine weitere Zeile 20a-d ist eine farbige Zeile, deren Empfangspixel 22 nur für eine bestimmte Farbe empfindlich sind, insbesondere durch entsprechende Farbfilter. Die Verteilung der Farben über die jeweiligen Empfangspixel 22 der farbigen Zeilen unterscheidet sich je nach Ausführungsform, weicht jedoch in den dargestellten Ausführungsformen von dem auch möglichen, aber nicht gezeigten üblichen RGB und insbesondere einem Bayer-Pattern ab. Abweichend von den gezeigten Ausführungsformen könnten auch weiße und farbige Pixel gemischt in einer Zeile auftreten, aber sofern es nicht mindestens eine Zeile nur mit weißen Pixeln gibt, resultiert daraus eine geringere Auflösung der für das Codelesen besonders wichtigen grauwertigen Bildzeilen.

Figur 3 zeigt eine Ausführungsform mit je einer roten Zeile 20a, einer blauen Zeile 20b und einer weißen Zeile 20c. Die Zeilen 20a-c sind also in sich homogen und die Empfangspixel 22 innerhalb einer Zeile 20a-c für ein gleiches optisches Spektrum empfindlich. Figur 4 zeigt eine Variante mit einer zusätzlichen weißen Zeile 20d.

In der Ausführungsform nach Figur 5 sind für rot und für blau empfindliche Empfangspixel 22 innerhalb einer farbigen Zeile 20a alternierend gemischt. Dadurch ist in Kombination mit einer weißen Zeile 20b ein Aufbau mit insgesamt nur zwei Zeilen möglich. Figur 6 zeigt eine Variante, in der sowohl die farbige Zeile 20a-b als auch die weiße Zeile 20c-d gedoppelt ist.

Diese Beispiele sind nur eine Auswahl basierend auf den Grundfarben rot und blau mit weiß (RBW). Weitere Ausführungsformen nutzen andere Farbfilter und Farben. So wäre auch die Verwendung von grün mit rot oder blau (RGW, BGW) oder aller drei Grundfarben (RGBW) denkbar. Weiterhin kommen auch die subtraktiven Grundfarben blau-grün (cyan), purpur (magenta) und gelb (yellow) in analogen Kombinationen in Betracht (CMW, CYW, MYW oder CMYW).

In den Ausführungsbeispielen der Figuren 3 bis 6 werden zunächst nur Bilddaten in den zwei Grundfarben rot und blau aufgenommen. Ist eine Repräsentation der Farbe in RGB-Werten erwünscht, so lässt sich die fehlende Farbe grün durch G=W-R-B oder allgemeiner eine Funktion f(W, R, B) zumindest annähernd rekonstruieren. Die Rekonstruktion ist analog für eine andere fehlende Farbe möglich. Nach einer solchen Rekonstruktion oder in einem Schritt mit der Rekonstruktion erfolgt vorzugsweise eine Farbanpassung, in der die aufgenommenen Farben zu Sollfarben korrigiert werden. Dazu kann eine Matrix hinterlegt sein, die die verschiedenen Farbkanäle und den Grauwertkanal gewichtet, oder es wird eine Nachschlagtabelle angegeben, die der jeweils aufgenommenen Farbe eine Sollfarbe zuordnet. Die Aufgabe der Nachschlagtabelle kann auch von einem neuronalen Netz übernommen werden. Eine Farbanpassung ist auch möglich, wenn der Bildsensor 18 alle Grundfarben aufnimmt und keine Grundfarbe rekonstruiert wird. Figur 7 zeigt eine schematische Darstellung einer Verarbeitungspipeline der Steuer- und Auswertungseinheit in einer Ausführungsform mit der ersten Vorverarbeitungseinheit 24, der zweiten Vorverarbeitungseinheit 25 und der weiteren Verarbeitungseinheit 26. Die erste Vorverarbeitungseinheit 24 trägt diesen Namen, weil sie für das digitale Zoom zuständig ist. Es ist aber vorzugsweise die zweite Vorverarbeitungseinheit 25, die direkt mit dem Bildsensor 18 verbunden ist und somit den Anfang der Verarbeitungspipeline bildet, es folgen die erste Vorverarbeitungseinheit 24 und die weitere Verarbeitungseinheit 26. In anderen Ausführungsformen gibt es nur die erste Vorverarbeitungseinheit 24. Beide Vorverarbeitungseinheiten 24, 25 sind vorzugsweise auf je einem FPGA implementiert.

Der Bildsensor 18 nimmt jeweils eine Bildzeile auf und stellt die Bildinformationen in mindestens einem Grauwertkanal und zwei Farbkanälen auf. Im Folgenden werden weiß, rot und blau als stellvertretendes Beispiel herangezogen. Im Beispiel muss demnach ein grüner Farbkanal rekonstruiert werden, wenn vollständige RGB-Farben ausgegeben werden sollen. Alternativ nimmt bereits der Bildsensor 18 eine grüne Bildzeile auf, womöglich in Nachahmung eines Bayerpatterns sogar zwei grüne Bildzeilen, so dass es schon originär einen grünen Farbkanal gibt. Die Erläuterungen mit den beispielhaft genannten Farben sind auf andere Bildsensoren 18 mit anderen Farbempfindlichkeiten und/oder Repräsentationen des Farbraums übertragbar.

Die Bildinformationen in dem Grauwertkanal und den ursprünglichen Farbkanälen werden an die zweite Vorverarbeitungseinheit 25 übergeben beziehungsweise von dort ausgelesen oder gestreamt. Eine Farbberechnungseinheit 48 der zweiten Vorverarbeitungseinheit 25 rekonstruiert den fehlenden Farbkanal und/oder passt die Farben wie oben beschrieben an. Die Bildinformationen werden dann in dem Grauwertkanal und den Farbkanälen, die um den rekonstruierten Farbkanal ergänzt sind, an die erste Vorverarbeitungseinheit 24 weitergegeben. Sofern keine Farbe rekonstruiert werden soll und keine Farbanpassung erfolgt, ist die zweite Vorverarbeitungseinheit 25 verzichtbar. Weiterhin könnte deren Funktionalität auch mit auf der ersten Vorverarbeitungseinheit 24 implementiert werden.

Die erste Vorverarbeitungseinheit 24 weist eine Vielzahl von Verarbeitungskanälen 50 auf, vorzugsweise mindestens je einen Verarbeitungskanal 50 für den Grauwertkanal und jeden der Farbkanäle einschließlich eines möglichen rekonstruierten Farbkanals.

Die Verarbeitungskanäle 50 leisten jeweils parallel das sogleich zu beschreibende digitale Zoom für den ihnen zugeordneten Grauwert- oder Farbkanal. Dies wird von einer gemeinsamen Zoomsteuerung 52 koordiniert, die gewährleistet, dass die Synchronität gewahrt bleibt und alle Kanäle in einer einheitlichen Weise gezoomt oder skaliert werden. Die parallelen Verarbeitungskanäle 50 ermöglichen es, in Echtzeit die großen Datenmengen des Bildsensors 18 zu verarbeiten. Je stärker die Verarbeitung parallelisiert ist, desto geringer kann insbesondere die Taktfrequenz in einem FPGA gewählt und somit die dynamische Verlustleistung reduziert und das Platzieren und Verdrahten in dem FPGA vereinfacht werden. Die neu skalierten farbigen Bildzeilen werden vorzugsweise zusammengefasst und ebenso wie die neu skalierte grauwertige Bildzeile an die weitere Verarbeitungseinheit 26 oder einen Speicher übermittelt, auf den diese zugreifen kann.

Um einen noch höheren Parallelisierungsgrad zu erreichen, können die Bildzeilen in allen Kanälen in der Mitte geteilt und dann eine Halbzeile gespiegelt werden. Die Halbzeilen werden dann wiederum parallel zueinander verarbeitet, wofür die Verarbeitungskanäle 50 nochmals verdoppelt werden können. Das Aufteilen und Spiegeln kann die erste Vorverarbeitungseinheit 24 den Verarbeitungskanälen 50 vorgelagert oder zu deren Anfang, aber auch bereits die zweite Verarbeitungseinheit 25 übernehmen. Der Zoomalgorithmus kann somit die jeweiligen Kanäle parallel und synchron aus der Mitte heraus zoomen oder neu skalieren. Ein Zoom aus der Mitte heraus kann alternativ auch sinnvoll sein, wenn die Halbzeilen nacheinander statt parallel zueinander bearbeitet werden. Denn dies stellt unter anderem auch sicher, dass die neu skalierten Zeilen immer zentriert sind.

Der passende Zoomfaktor wird vorzugsweise zeilenweise neu bestimmt. Grundlage dafür kann eine Abstandsinformation sein, die ein interner Abstandssensordes Codelesers 10 oder ein externer Sensor misst, beispielsweise ein vorgelagerter Laserscanner. Die weitere Verarbeitungseinheit 26 steuert die Abstandsmessung oder steht in Verbindung mit einer entsprechenden internen oder externen Verarbeitungseinheit. Für die Bestimmung des Zoomfaktors Z aus einer Abstandsinformation kann die erste Vorverarbeitungseinheit 24, die weitere Verarbeitungseinheit 26 und/oder ein anderer Baustein zuständig sein. Dementsprechend wird ein Abstandswert oder ein Zoomfaktor z an die erste Vorverarbeitungseinheit 24 kommuniziert. Weiterhin sind unterschiedliche Zoomfaktoren z je Verarbeitungskanal 50 denkbar, insbesondere wenn die originäre Auflösung in dem Grauwertkanal und den Farbkanälen nicht identisch ist.

Figur 8 zeigt eine Darstellung zur Illustration eines streckenden Zooms oder Zoom-In mit Zoomfaktor z>1. Dabei ist oben eine Eingangszeile vor dem Zoom und darunter eine Ausgangszeile nach dem Zoom gezeigt. Der senkrechte Strich symbolisiert die vorzugsweise vorgenommene Aufteilung in Halbzeilen. In dem Beispiel ist z=4/3=:b und a:=1/z=3/4. Anschaulich wird für eine lineare Reskalierung (Interpolation, Extrapolation) die Eingangszeile mit dem Zoomfaktor gestreckt und dann auf das in der Ausgangszeile eingehaltene ursprüngliche Pixelraster diskretisiert. Dabei liegen die Pixel der Ausgangszeile wegen z≠1 nicht bündig zu beiden Pixelübergängen der Eingangszeile. Ein Pixel der Ausgangszeile übernimmt den Wert der an- oder darüberliegenden Pixel der Eingangszeile mit einer Gewichtung entsprechend dem Überlappungsgrad. Konkrete Rechenvorschriften sind in Figur 8 angegeben, die sich analog auf eine beliebige Pixelanzahl erweitern lassen. Da nach dem Zoom-In die Zeilenbreite nicht mehr der ursprünglichen Zeilenbreite entspricht, wird vorzugsweise die neu skalierte Bildzeile rechts und links auf die ursprüngliche Zeilenbreite beschnitten.

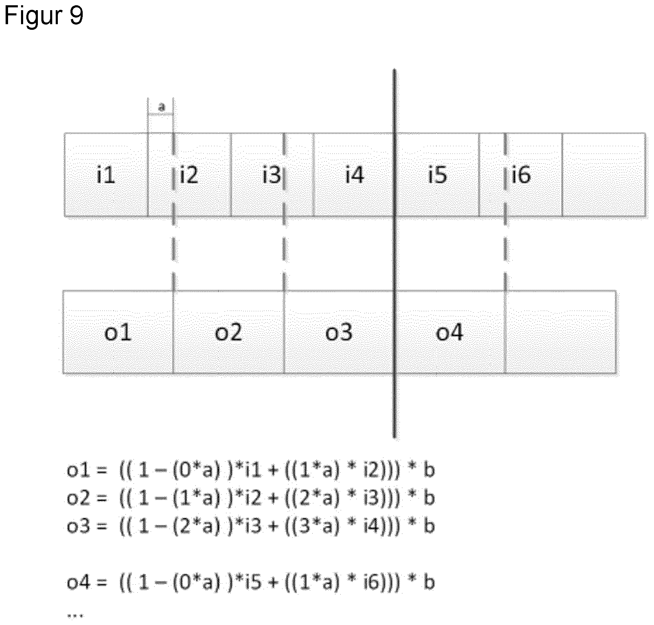

Figur 9 zeigt eine Darstellung zur Illustration eines stauchenden Zooms oder Zoom-Out mit Zoomfaktor z<1. Hier wurde zur Veranschaulichung mit z=3/4=:b gerade der Kehrwert des Beispiels der Figur 8 gewählt. Weiterhin sei nun a:= - (1-/1/z))=1/3. Abgesehen davon, dass nun gestaucht statt gestreckt wird und sich die in Figur 9 angegebenen Rechenvorschriften etwas anpassen, kann auf die Erläuterungen zu Figur 8 verwiesen werden. Nach dem Zoom-Out ist die Zeilenbreite geringer geworden, und vorzugsweise werden die fehlenden Pixel mit einem definierten Wert wie Null aufgefüllt.

In den konkret mit Figur 8 und 9 angegebenen Rechenvorschriften ist vorzugsweise die Randbedingung 0,5 ≤ z ≤ 2 gesetzt. Das Vorgehen ist aber analog auf eine lineare Reskalierung mit anderen Werten des Zoomfaktors z erweiterbar.

## Patentansprüche

1. Kamerabasierter Codeleser (10) zum Lesen eines optischen Codes (44) auf einem Objekt (40) in Relativbewegung zu dem Codeleser (10), wobei der Codeleser (10) einen zeilenförmigen Bildsensor (18) zum Aufnehmen einer jeweiligen Bildzeile und eine Steuer- und Auswertungseinheit (24, 25, 26) mit mindestens einer ersten Vorverarbeitungseinheit (24) und einer weiteren Verarbeitungseinheit (25) aufweist, wobei die erste Vorverarbeitungseinheit (24) mindestens mittelbar mit dem Bildsensor (18) verbunden und dafür ausgebildet ist, im Laufe der Relativbewegung Bildzeile für Bildzeile auszulesen, in einer Vorverarbeitung eine jeweilige Bildzeile mit einem Zoomfaktor z neu zu skalieren und dann an die weitere Verarbeitungseinheit (26) weiterzugeben, und wobei die weitere Verarbeitungseinheit (26) dafür ausgebildet ist, aus den Bildzeilen den optischen Code (44) zu lesen,
**dadurch gekennzeichnet,**
**dass** der Bildsensor (18) mehrere Zeilenanordnungen (20a-d) von Lichtempfangselementen (22) aufweist, dass ein Teil der Lichtempfangselemente (22) für weißes Licht und jeweils ein anderer Teil der Lichtempfangselemente (22) für Licht jeweils nur einer Farbe empfindlich ist und so ein Grauwertkanal zur Aufnahme von grauwertigen Bildzeilen und mehrere Farbkanäle zur Aufnahme von farbigen Bildzeilen gebildet sind, und dass die erste Verarbeitungseinheit (24) mehrere parallele Verarbeitungskanäle (50) aufweist, mindestens einen Verarbeitungskanal (50) für den Grauwertkanal und mindestens einen Verarbeitungskanal (50) je Farbkanal, um jeweils eine grauwertige Bildzeile und zugehörige farbige Bildzeilen parallel und synchron neu zu skalieren.

2. Codeleser (10) nach Anspruch 1,
der einen Abstandssensor aufweist, und wobei die Steuer- und Auswertungseinheit (24, 25, 26) dafür ausgebildet, den Zoomfaktor z aus einem Abstandswert des Abstandssensors zu bestimmen, insbesondere Bildzeile für Bildzeile.

3. Codeleser (10) nach Anspruch 1 oder 2,
wobei der Zoomfaktor z in den Verarbeitungskanälen (50) unterschiedlich ist.

4. Codeleser (10) nach einem der vorhergehenden Ansprüche,
wobei die Steuer- und Auswertungseinheit (24, 25, 26) dafür ausgebildet ist, Bildzeilen jeweils in der Mitte zu teilen und eine der entstehenden Halbzeilen zu spiegeln, und wobei die Verarbeitungskanäle (50) dafür ausgebildet sind, beide Halbzeilen einer Bildzeile parallel neu zu skalieren.

5. Codeleser (10) nach einem der vorhergehenden Ansprüche,
wobei die Verarbeitungskanäle (50) dafür ausgebildet sind, eine Bildzeile durch lineare Interpolation oder Extrapolation mit dem Zoomfaktor z neu zu skalieren, insbesondere indem die aufgenommene Bildzeile um den Zoomfaktor z gestreckt oder gestaucht und die gestreckte oder gestauchte Bildzeile wieder auf das ursprüngliche Pixelraster diskretisiert wird, wobei an Übergängen des Pixelrasters die gestreckten oder gestauchten Pixel proportional zu ihrem mit dem neuen Pixel überlappenden Flächenanteil zu dem neuen Pixel beitragen.

6. Codeleser (10) nach einem der vorhergehenden Ansprüche,
wobei die erste Vorverarbeitungseinheit (24) eine gemeinsame Zoomsteuerung (52) für alle Verarbeitungskanäle (50) aufweist.

7. Codeleser (10) nach einem der vorhergehenden Ansprüche,
wobei die erste Vorverarbeitungseinheit (24) ein FPGA (Field Programmable Gate Array) und/oder die weitere Verarbeitungseinheit (26) einen Mikroprozessor aufweist.

8. Codeleser (10) nach einem der vorhergehenden Ansprüche,
wobei die Steuer- und Auswertungseinheit (24, 25, 26) eine zweite Vorverarbeitungseinheit (25) aufweist, insbesondere ein FPGA, die zwischen dem Bildsensor (18) und der ersten Vorverarbeitungseinheit (24) angeordnet und dafür ausgebildet ist, eine Farbanpassung (48) der mit den Farbkanälen aufgenommenen Bildzeilen vorzunehmen und/oder aus dem Grauwertkanal und den Farbkanälen mindestens einen weiteren Farbkanal zu erzeugen.

9. Codeleser (10) nach einem der vorhergehenden Ansprüche,
wobei ein Grauwertbild aus Bildzeilen des Grauwertkanals zum Lesen von Codes verwendet wird und/oder wobei ein Farbbild aus Bildzeilen der Farbkanäle dafür verwendet wird, um codetragende Objekte (40) und/oder Codebereiche zu erkennen, zu klassifizieren und/oder vom Bildhintergrund zu unterscheiden.

10. Codeleser (10) nach einem der vorhergehenden Ansprüche,
wobei zwei, drei oder vier Zeilenanordnungen (20a-d) vorgesehen sind und mindestens eine Zeilenanordnung (20a-d) nur Lichtempfangselemente (22) aufweist, die für weißes Licht empfindlich sind.

11. Codeleser (10) nach einem der vorhergehenden Ansprüche,
wobei der Bildsensor (18) Lichtempfangselemente (22) aufweist, die für jeweils eine von zwei Grundfarben empfindlich sind, insbesondere rot und blau, aber keine Lichtempfangselemente (22), die für die dritte Grundfarbe empfindlich sind, insbesondere grün.

12. Verfahren zum Lesen eines optischen Codes (44) auf einem Objekt (40) mit einem kamerabasierten Codeleser (10), insbesondere einem kamerabasierten Codeleser (10) nach einem der vorhergehenden Ansprüche, in Relativbewegung zu dem Objekt (40), wobei das Objekt (40) Bildzeile für Bildzeile von einem zeilenförmigen Bildsensor (18) des Codelesers (10) aufgenommen wird und eine erste Vorverarbeitungseinheit (24) eine jeweilige Bildzeile ausliest, mit einem Zoomfaktor z neu skaliert und dann an eine weitere Verarbeitungseinheit (26) weitergibt, die aus den neu skalierten Bildzeilen den optischen Code (44) liest,
**dadurch gekennzeichnet,**
**dass** der Bildsensor (18) mehrere Zeilenanordnungen (20a-d) von Lichtempfangselementen (22) aufweist, dass ein Teil der Lichtempfangselemente (22) für weißes Licht und jeweils ein anderer Teil der Lichtempfangselemente (22) für Licht jeweils nur einer Farbe empfindlich ist und so ein Grauwertkanal, mit dem eine grauwertige Bildzeile aufgenommen wird, und mehrere Farbkanäle gebildet sind, mit denen jeweils eine farbige Bildzeile aufgenommen wird, und dass die erste Verarbeitungseinheit (24) in mehreren parallelen Verarbeitungskanälen (50), mindestens einem Verarbeitungskanal (50) für den Grauwertkanal und mindestens einem Verarbeitungskanal (50) je Farbkanal, jeweils eine grauwertige Bildzeile und zugehörige farbige Bildzeilen parallel und synchron neu skaliert.

## Claims

1. A camera based code reader (10) for reading an optical code (44) on an object (40) in a relative movement to the code reader (10), wherein the code reader (10) has a linear image sensor (18) to record a respective image line and a control and evaluation unit (24, 25, 26) with at least one first pre-processing unit (24) and a further processing unit (25); wherein the first pre-processing unit (24) is connected at least indirectly to the image sensor (18) and is configured to read image line by image line in the course of the relative movement, to rescale a respective image line with a zoom factor z in a pre-processing, and then to forward it to the further processing unit (26); and wherein the further processing unit (26) is configured to read the optical code (44) from the image lines,
**characterized in that**
the image sensor (18) has a plurality of linear arrangements (20a-d) of light reception elements (22); **in that** some of the light reception elements (22) are sensitive to white light and some other respective light reception elements (22) are sensitive to light of respectively only one color and thus a grayscale channel is formed to record grayscale image lines and a plurality of color channels are formed to record color image lines; and **in that** the first processing unit (24) has a plurality of parallel processing channels (50), at least one processing channel (50) for the grayscale channel, and at least one processing channel (50) per color channel to respectively rescale a grayscale image line and associated color image lines in parallel and synchronously.

2. A code reader (10) in accordance with claim 1,
that has a distance sensor, and wherein the control and evaluation unit (24, 25, 26) is configured to determine the zoom factor z from a distance value of the distance sensor, in particular image line by image line.

3. A code reader (10) in accordance with claim 1 or claim 2,
wherein the zoom factor z is different in the processing channels (50).

4. A code reader (10) in accordance with any one of the preceding claims, wherein the control and evaluation unit (24, 25, 26) is configured to divide image lines in the middle in each case and to mirror one of the half lines produced; and wherein the processing channels (50) are configured to rescale both half lines of an image line in parallel.

5. A code reader (10) in accordance with any one of the preceding claims, wherein the processing channels (50) are configured to rescale an image line by linear interpolation or extrapolation with the zoom factor z, in particular in that the recorded image line is stretched or compressed by the zoom factor z and the stretched or compressed image line is discretized to the original pixel grid again, with the stretched or compressed pixels contributing to the new pixel in proportion with their surface portion overlapping the new pixel at transitions of the pixel grid.

6. A code reader (10) in accordance with any one of the preceding claims, wherein the first pre-processing unit (24) has a common zoom controller (52) for all the processing channels (50).

7. A code reader (10) in accordance with any one of the preceding claims, wherein the first pre-processing unit (24) has an FPGA (field programmable gate array) and/or the further processing unit (26) has a microprocessor.

8. A code reader (10) in accordance with any one of the preceding claims, wherein the control and evaluation unit (24, 25, 26) has a second pre-processing unit (25), in particular an FPGA, that is arranged between the image sensor (18) and the first pre-processing unit (24) and that is configured to carry out a color adaptation (48) of the image lines recorded with the color channels and/or to generate at least one further color channel from the grayscale channel and the color channels.

9. A code reader (10) in accordance with any one of the preceding claims,
wherein a grayscale image from image lines of the grayscale channel is used to read codes; and/or wherein a color image from image lines of the color channels is used to recognize and to classify code bearing objects (40) and/or code regions and/or to distinguish them from the image background.

10. A code reader (10) in accordance with any one of the preceding claims, wherein two, three, or four linear arrangements (20a-d) are provided and at least one linear arrangement (20a-d) only has light reception elements (22) that are sensitive to white light.

11. A code reader (10) in accordance with any one of the preceding claims, wherein the image sensor (18) has light reception elements (22) that are respectively sensitive to one of two primary colors, in particular red and blue, but has no light reception elements (22) that are sensitive to the third primary color, in particular green.

12. A method of reading an optical code (44) on an object (40) using a camera based code reader (10), in particular a camera based code (10) in accordance with any one of the preceding claims, in a relative movement to the object (40), wherein the object (40) is recorded image line by image line by a linear image sensor (18) of the code reader (10) and a first pre-processing unit (24) reads a respective image line, rescales it with a zoom factor z, and then forwards it to a further processing unit (26) that reads the optical code (44) from the rescaled image lines,
**characterized in that**
the image sensor (18) has a plurality of linear arrangements (20a-d) of light reception elements (22); **in that** some of the light reception elements (22) are sensitive to white light and some other respective light reception elements (22) are sensitive to light of respectively only one color and thus a grayscale channel by which a grayscale image line is recorded, and a plurality of color channels are formed by which a respective color image line is recorded; and **in that** the first processing unit (24) respectively rescales a grayscale image line and associated color image lines in parallel and synchronously in a plurality of parallel processing channels (50), at least one processing channel (50) for the grayscale channel, and at least one processing channel (50) per color channel.

## Revendications

1. Lecteur de code (10), basé sur une caméra, pour lire un code optique (44) sur un objet (40) en mouvement relatif par rapport au lecteur de code (10), le lecteur de code (10) comprenant un capteur d'image (18) en forme de ligne destiné à enregistrer une ligne d'image respective et une unité de commande et d'évaluation (24, 25, 26) ayant au moins une première unité de prétraitement (24) et une autre unité de traitement (25), la première unité de prétraitement (24) étant reliée au moins indirectement au capteur d'image (18) et étant conçue pour lire ligne d'image par ligne d'image au cours du mouvement relatif, pour redimensionner dans un prétraitement une ligne d'image respective avec un facteur de zoom z et pour la transmettre ensuite à l'autre unité de traitement (26), et l'autre unité de traitement (26) étant conçue pour lire le code optique (44) à partir des lignes d'image,
**caractérisé en ce que**
le capteur d'image (18) comprend plusieurs agencements en ligne (20a-d) d'éléments de réception de lumière (22), **en ce qu'**une partie des éléments de réception de lumière (22) est sensible à la lumière blanche et une autre partie respective des éléments de réception de lumière (22) est sensible à la lumière d'une seule couleur respective, ce qui procure un canal de niveaux de gris destiné à enregistrer des lignes d'image en niveaux de gris et plusieurs canaux de couleurs destinés à enregistrer des lignes d'image en couleurs, et **en ce que** la première unité de traitement (24) comprend plusieurs canaux de traitement parallèles (50), à savoir au moins un canal de traitement (50) pour le canal de niveaux de gris et au moins un canal de traitement (50) par canal de couleurs, afin de redimensionner en parallèle et de manière synchrone respectivement une ligne d'image en niveaux de gris et des lignes d'image en couleurs associées.

2. Lecteur de code (10) selon la revendication 1,
comprenant un capteur de distance, l'unité de commande et d'évaluation (24, 25, 26) étant conçue pour déterminer le facteur de zoom z à partir d'une valeur de distance du capteur de distance, en particulier ligne d'image par ligne d'image.

3. Lecteur de code (10) selon la revendication 1 ou 2,
dans lequel le facteur de zoom z est différent selon les canaux de traitement (50).

4. Lecteur de code (10) selon l'une des revendications précédentes,
dans lequel l'unité de commande et d'évaluation (24, 25, 26) est conçue pour diviser les lignes d'image respectivement en leur milieu et pour inverser l'une des demi-lignes résultantes, et les canaux de traitement (50) sont conçus pour redimensionner en parallèle les deux demi-lignes d'une ligne d'image.

5. Lecteur de code (10) selon l'une des revendications précédentes,
dans lequel les canaux de traitement (50) sont conçus pour redimensionner une ligne d'image avec le facteur de zoom z par interpolation ou extrapolation linéaire, en particulier en étirant ou en comprimant la ligne d'image enregistrée du facteur de zoom z et en discrétisant la ligne d'image étirée ou comprimée sur la trame de pixels initiale, et
au niveau des transitions de la trame de pixels, les pixels étirés ou comprimés contribuent au nouveau pixel proportionnellement à leur part de surface chevauchant le nouveau pixel.

6. Lecteur de code (10) selon l'une des revendications précédentes,
dans lequel la première unité de prétraitement (24) comprend une commande de zoom (52) commune à tous les canaux de traitement (50).

7. Lecteur de code (10) selon l'une des revendications précédentes,
dans lequel la première unité de prétraitement (24) comprend un FPGA (Field Programmable Gate Array) et/ou l'autre unité de traitement (26) comprend un microprocesseur.

8. Lecteur de code (10) selon l'une des revendications précédentes,
dans lequel l'unité de commande et d'évaluation (24, 25, 26) comprend une deuxième unité de prétraitement (25), en particulier un FPGA, qui est disposée entre le capteur d'image (18) et la première unité de prétraitement (24) et qui est conçue pour procéder à une adaptation des couleurs (48) des lignes d'image enregistrées avec les canaux de couleurs et/ou pour générer au moins un autre canal de couleurs à partir du canal de niveaux de gris et des canaux de couleurs.

9. Lecteur de code (10) selon l'une des revendications précédentes,
dans lequel une image en niveaux de gris provenant de lignes d'image du canal de niveaux de gris est utilisée pour lire des codes, et/ou une image en couleurs provenant de lignes d'image des canaux de couleurs est utilisée pour détecter, classer et/ou distinguer des objets porteurs de codes (40) et/ou des zones de codes de l'arrière-plan de l'image.

10. Lecteur de code (10) selon l'une des revendications précédentes,
dans lequel sont prévus deux, trois ou quatre agencements en ligne (20ad), et au moins un agencement en ligne (20a-d) ne comporte que des éléments de réception de lumière (22) qui sont sensibles à la lumière blanche.

11. Lecteur de code (10) selon l'une des revendications précédentes,
dans lequel le capteur d'image (18) comprend des éléments de réception de lumière (22) qui sont sensibles chacun à l'une des deux couleurs fondamentales, en particulier le rouge et le bleu, mais ne comprend pas d'éléments de réception de lumière (22) qui sont sensibles à la troisième couleur fondamentale, en particulier le vert.

12. Procédé de lecture d'un code optique (44) sur un objet (40) au moyen d'un lecteur de code (10) basé sur une caméra, en particulier au moyen d'un lecteur de code (10) basé sur une caméra selon l'une des revendications précédentes, qui est en mouvement relatif par rapport à l'objet (40),
dans lequel l'objet (40) est enregistré ligne d'image par ligne d'image par un capteur d'image (18) en forme de ligne du lecteur de code (10), et une première unité de prétraitement (24) lit une ligne d'image respective, la redimensionne avec un facteur de zoom z et la transmet ensuite à une autre unité de traitement (26) qui lit le code optique (44) à partir des lignes d'image redimensionnées,
**caractérisé en ce que**
le capteur d'image (18) comprend plusieurs agencements en ligne (20a-d) d'éléments de réception de lumière (22), **en ce qu'**une partie des éléments de réception de lumière (22) est sensible à la lumière blanche et une autre partie respective des éléments de réception de lumière (22) est sensible à la lumière d'une seule couleur respective, ce qui procure un canal de niveaux de gris avec lequel une ligne d'image en niveaux de gris est enregistrée, et plusieurs canaux de couleurs avec lesquels une ligne d'image en couleurs respective est enregistrée, et **en ce que** la première unité de traitement (24) redimensionne en parallèle et de manière synchrone respectivement une ligne d'image en niveaux de gris et des lignes d'image en couleurs associées dans plusieurs canaux de traitement parallèles (50), à savoir dans au moins un canal de traitement (50) pour le canal de niveaux de gris et dans au moins un canal de traitement (50) par canal de couleurs.
